# EUROPÄISCHE PATENTSCHRIFT

(11) **EP 1 593 886 B1**
(45) Veröffentlichungstag und Bekanntmachung des Hinweises auf die Patenterteilung: **17.02.2016**
(21) Anmeldenummer: 05007020.0
(22) Anmeldetag: 31.03.2005
(51) Int. Cl.: F16J 15/32, G01P 3/44

(54) **Dichtungsanordnung mit Sensor**
Sealing device comprising a sensor
Joint d'étanchéité comprenant un capteur

(30) Priorität: 07.05.2004 DE 102004023315
(43) Veröffentlichungstag der Anmeldung: 09.11.2005
(73) Patentinhaber: Carl Freudenberg, 69469 Weinheim (DE)
(72) Erfinder: Hufnagel, Werner, 72663 Grossbettlingen (DE); Kammerer, Eric, 52200 Langres (FR)

(56) Entgegenhaltungen:
- EP-A- 0 631 112
- DE-A1- 19 912 135

## Beschreibung

### Technisches Gebiet

Die Erfindung betrifft eine Dichtungsanordnung, umfassend eine Dichtung mit einer Dichtlippe und eine Sensoreinrichtung.

### Stand der Technik

Dichtungsanordnungen mit einer Dichtung und einer Sensoreinrichtung sind aus der DE 199 51 340 bekannt. Der Sensor der vorbekannten Dichtungsanordnung dient vornehmlich der Erfassung der Drehzahl einer abzudichtenden Welle.

Bei modernen Kraftfahrzeugen gibt es häufig verlängerte bzw. variable Wechselintervalle des Schmiermittels. Zum Ermitteln des tatsächlichen Alters des Schmiermittels ist eine Sensorik notwendig, die bestimmte Parameter des Schmiermittels überwacht und bei Erreichen bestimmter Grenzwerte einen notwendigen Wechsel des Schmiermittels anzeigt. Die Sensorik ist durch eine Messzunge gebildet, die beispielsweise die Total Base Number des Schmiermittels erfasst.

Die DE 199 12 135 A1 offenbart einen Wellendichtring, in den ein Temperatursensor integriert ist. Der Sensor ragt in den Flüssigkeitsraum unter der Dichtlippe hinein und erfasst die Temperatur des abzudichtenden Mediums.

### Darstellung der Erfindung

Der Erfindung liegt die Aufgabe zugrunde, eine Dichtungsanordnung mit einer Sensorik zu entwickeln, die geeignet ist, bestimmte Parameter des Schmiermittels zu überwachen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Dichtungsanordnung vorgesehen, umfassend eine Dichtung mit einer Dichtlippe und eine Sensoreinrichtung mit einer in einen abzudichtenden Raum ragenden Messzunge, wobei die Messzunge während der bestimmungsgemäßen Verwendung mit abzudichtendem Medium beaufschlagbar ist.

Dadurch, dass die Messzunge in den abzudichtenden Raum ragt, wird sie während des Betriebs mit dem zu überwachenden Schmiermittel beaufschlagt. Dabei können die zu überwachenden Parameter des Schmiermittels ständig erfasst und ausgewertet werden.

In dem abzudichtenden Raum ist eine Rückhalteeinrichtung für abzudichtendes Medium angeordnet, in die die Messzunge hineinragt. Die Rückhalteeinrichtung füllt sich zu Beginn der bestimmungsgemäßen Verwendung mit abzudichtendem Medium. Da die Messzunge in die Rückhalteeinrichtung eintaucht, ist die Messzunge während des Betriebs ständig mit dem Medium benetzt. Das Volumen der Rückhalteeinrichtung kann auf die Erfordernisse der Messzunge und des zu messenden Parameters abgestimmt werden. Da die Rückhalteeinrichtung während des Betriebs ständig mit dem Medium benetzt ist, können auch Messwerte erfasst werden, die eine längere Messdauer erfordern.

In einer Ausgestaltung kann die Rückhalteeinrichtung an der Dichtung befestigt sein. Die Rückhalteeinrichtung kann dadurch kostengünstig und einfach an der Dichtung angeformt werden. Die Rückhalteeinrichtung kann beispielsweise einteilig mit dem Tragkörper der Dichtung hergestellt werden.

Die Rückhalteeinrichtung kann eine Rückhaltelippe aufweisen, die eine abzudichtende Welle zumindest teilweise umschließt. Dabei bildet sich ein großes Reservoir, welches sich während des Betriebs mit dem abzudichtenden Medium füllt, was sich vorteilhaft auf die Messgenauigkeit der Messzunge auswirkt.

Die Rückhaltelippe kann die Welle zumindest teilweise berührend umschließen. Die Rückhalteeinrichtung bildet dadurch eine vorgeschaltete Dichtung, wobei die Rückhalteeinrichtung während der bestimmungsgemäßen Verwendung mit abzudichtendem Medium gefüllt wird.

In einer anderen Ausgestaltung kann die Rückhalteeinrichtung an der Sensoreinrichtung befestigt sein. Sensoreinrichtung und Rückhalteeinrichtung können dann als vorgefertigte Einheit in einer Dichtung montiert werden. Die Einheit kann in handelsüblichen Dichtungen montiert werden. Die Dichtungen können einfach und kostengünstig für die Aufnahme der Einheit vorbereitet werden.

Die Rückhalteeinrichtung kann eine Abtropfbohrung aufweisen. Durch die Abtropfbohrung wird das abzudichtende Medium während des Betriebs ständig ausgetauscht, bzw. die Rückhalteeinrichtung wird bei Beginn des Betriebs neu befüllt. Dadurch ist sicher gestellt, dass ständig eine andere Teilmenge des Mediums geprüft wird. Das Messergebnis kann dann auf das gesamte Medium übertragen werden.

Die Messzunge kann als Messwertgeber zur Erfassung des Alters des abzudichtenden Mediums ausgebildet sein. Durch die Erfassung bestimmter Parameter wie der Total Base Number kann mit der Messzunge das Alter des Mediums bestimmt werden. Die Bestimmung des Ölalters ermöglicht die Einführung variabler Ölwechselintervalle, die sich nach der tatsächlichen Lebensdauer des Öls richten.

Die Messzunge kann als Messwertgeber zur Erfassung der Temperatur und/oder des Drucks und/oder der Füllmenge des abzudichtenden Mediums ausgebildet sein. Dadurch können für den Betrieb wichtige Daten des abzudichtenden Mediums erfasst werden. Es kann rechtzeitig ein Warnsignal übermittelt werden wenn Temperatur, Druck und Füllmenge außerhalb der Grenzwerte liegen.

Die Dichtung kann einen Tragkörper aufweisen, wobei der Tragkörper eine Ausnehmung aufweisen kann in der die Sensoreinrichtung angeordnet ist. Das ermöglicht eine einfache und kostengünstige Befestigung der Sensoreinrichtung.

In der Dichtungsanordnung kann eine Reinigungseinrichtung angeordnet sein, umfassend eine Reinigungsleitung und eine Reinigungsdüse, wobei die Reinigungsdüse auf die Messzunge gerichtet ist. Mittels der Reinigungseinrichtung können Verschmutzungen von der Messzunge entfernt werden, die die Messgenauigkeit der Sensoreinrichtung beeinträchtigen können. Als Reinigungsmittel kann Druckluft, neues Schmiermittel und/oder schmiermittelverträgliches Lösungsmittel verwendet werden.

Es kann ein Gehäuseverschlussdeckel mit einer Dichtungsanordnung vorgesehen sein, wobei der Tragkörper als Dichtflansch mit einer Ausnehmung ausgebildet sein kann, wobei die Sensoreinrichtung in der Ausnehmung angeordnet ist.

In einer Ausgestaltung kann der Versteifungsflansch aus Kunststoff-Spritzguss gebildet sein. Versteifungsflansche aus Kunststoff-Spritzguss sind einfach und kostengünstig herstellbar.

In einer anderen Ausgestaltung kann der Versteifungsflansch aus einem metallischen Werkstoff gebildet sein. Versteifungsflasche aus metallischen Werkstoffen weisen eine hohe Festigkeit auf.

### Kurzbeschreibung der Zeichnung

Einige Ausführungsbeispiele der erfindungsgemäßen Dichtungsanordnung werden nachfolgend anhand der Figuren 1 bis 7 und 9 bis 10 näher erläutert. Es zeigen, jeweils in schematischer Darstellung:
- Fig. 1: eine Dichtungsanordnung mit einer am Tragkörper befestigten Rückhalteeinrichtung;
- Fig. 2: eine Dichtungsanordnung mit einer in der abzudichtenden Bohrung befestigten Rückhalteeinrichtung, wobei die Dichtung am Innenumfang des Haftteils der Rückhalteeinrichtung festgelegt ist;
- Fig. 3: eine Dichtungsanordnung mit einer Dichtlippe, die entgegen des abzudichtenden Raums vorgewölbt ist;
- Fig. 4: einen Gehäuseverschlussdeckel mit einer am Versteifungsflansch befestigten Sensoreinrichtung;
- Fig. 5: einen Gehäuseverschlussdeckel mit einer am Dichtflansch befestigten Sensoreinrichtung;
- Fig. 6: einen Gehäuseverschlussdeckel mit einer am Dichtflansch befestigten Sensoreinrichtung;
- Fig. 7: den Gehäuseverschlussdeckel gemäß Figur 6 in der Draufsicht;
- Fig. 8: eine Dichtungsanordnung ohne Rückhalteeinrichtung;
- Fig. 9: eine Dichtungsanordnung mit Sensorik und einer Reinigungseinrichtung;
- Fig. 10: eine Dichtungsanordnung mit Sensorik und einer Reinigungseinrichtung, die in der Dichtung angeordnet ist.

### Ausführung der Erfindung

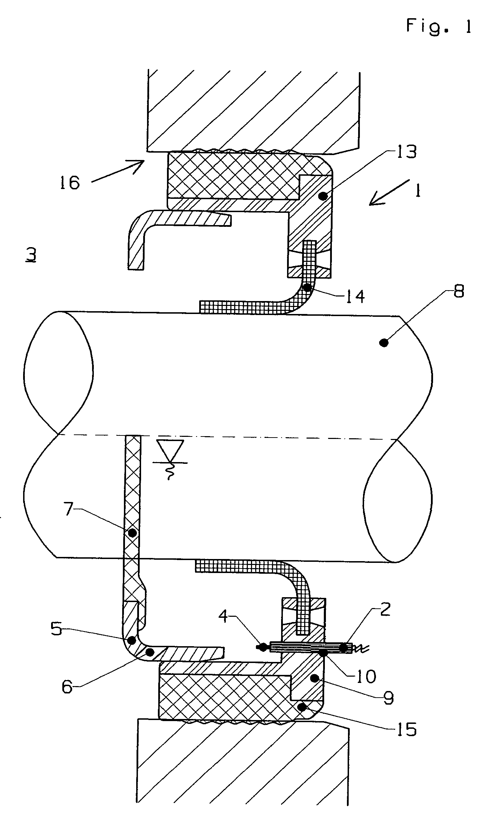

Figur 1 zeigt eine Dichtungsanordnung 1 mit einer Dichtung 13, die eine in den abzudichtenden Raum 3 vorgewölbte Dichtlippe 14 aufweist. Die Dichtlippe 14 und eine statische Dichtung 15 zur Abdichtung der Dichtung 13 gegenüber einem Gehäuse 16 sind an einem Tragkörper 9 befestigt. Der Tragkörper 9 weist eine Ausnehmung 10 auf, in der die Sensoreinrichtung 2 befestigt ist. Die Messzunge 4 der Sensoreinrichtung 2 ragt in den abzudichtenden Raum 3. Die Sensoreinrichtung 2 ist als Messwertgeber zur Bestimmung des Alters des abzudichtenden Mediums ausgebildet und kann alternativ auch als Messwertgeber zur Bestimmung von Temperatur, Druck und Füllmenge dienen. An dem Tragkörper 9 ist eine Rückhalteeinrichtung 5 mit einer Rückhaltelippe 7 befestigt, wobei die Rückhaltelippe 7 die abzudichtende Welle 8 teilweise, in dieser Ausführung halb, umschließt. Die Messzunge 4 ragt in den durch die Rückhaltelippe gebildeten Raum und ist während des Betriebs mit dem abzudichtenden Medium benetzt. Die Rückhalteeinrichtung 5 weist an der tiefsten Stelle eine Abtropfbohrung 6 auf, durch die das abzudichtende Medium abtropft und dadurch während des Betriebs ständig erneuert wird. Die Sensoreinrichtung 2 ist zerstörungsfrei lösbar mit der Dichtungsanordnung 1 verbunden und zur Umgebungsseite hin demontierbar. Dafür kann die Sensoreinrichtung 2 mittels eines Bajonett- oder Schnappverschluss in der Dichtungsanordnung 1 befestigt sein. Weitere Befestigungsmöglichkeiten sind Einpressen oder Kleben.

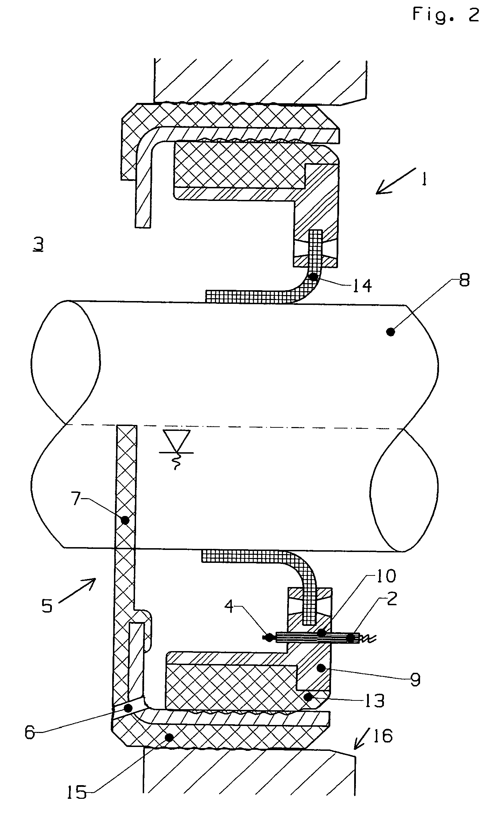

Figur 2 zeigt eine Dichtungsanordnung gemäß Figur 1, wobei die Rückhalteeinrichtung 5 in dieser Ausführung als ringförmiges Bauteil ausgebildet ist und die Dichtung 13 außenumfangsseitig umschließt. Die Rückhalteeinrichtung 5 weist eine statische Dichtung 15 auf, die zur Abdichtung gegenüber dem Gehäuse 16 vorgesehen ist. Die Rückhaltelippe 7 der Rückhalteeinrichtung 5 umschließt die abzudichtende Welle 8 teilweise berührend.

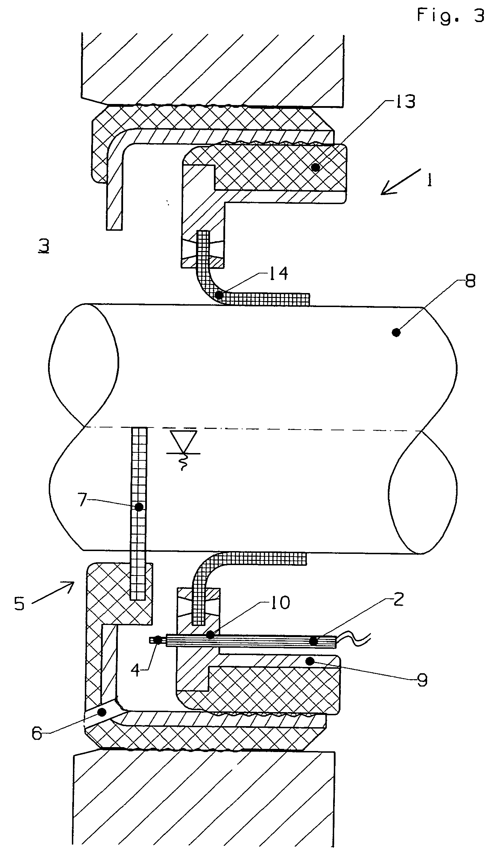

Figur 3 zeigt eine Dichtungsanordnung 1 gemäß Figur 2, wobei die Dichtlippe 14 der Dichtung 13 entgegen dem abzudichtenden Raum 3 vorgewölbt ist.

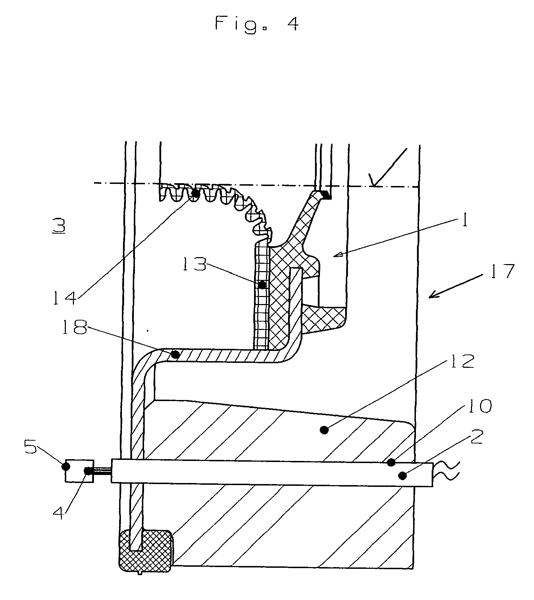

Figur 4 zeigt einen Gehäuseverschlussdeckel 17 mit einem Versteifungsflansch 12 aus Leichtmetall-Spritzguss und einem Dichtflansch 18 aus zähhartem Werkstoff. An dem Dichtflansch 18 ist innenumfangsseitig eine Dichtung 13 mit einer Dichtlippe 14 angeordnet die in den abzudichtenden Raum 3 vorgewölbt ist. Der Versteifungsflansch 12 weist eine Ausnehmung 10 auf, in der die Sensoreinrichtung 2 befestigt ist. Die Messzunge 4 der Sensoreinrichtung 2 ragt in den abzudichtenden Raum 3. An der Sensoreinrichtung 2 ist eine Rückhalteeinrichtung 5 in Form einer Pfanne befestigt. Durch die Rückhalteeinrichtung 5 ist die Messzunge 4 während des Betriebs ständig mit abzudichtendem Medium benetzt.

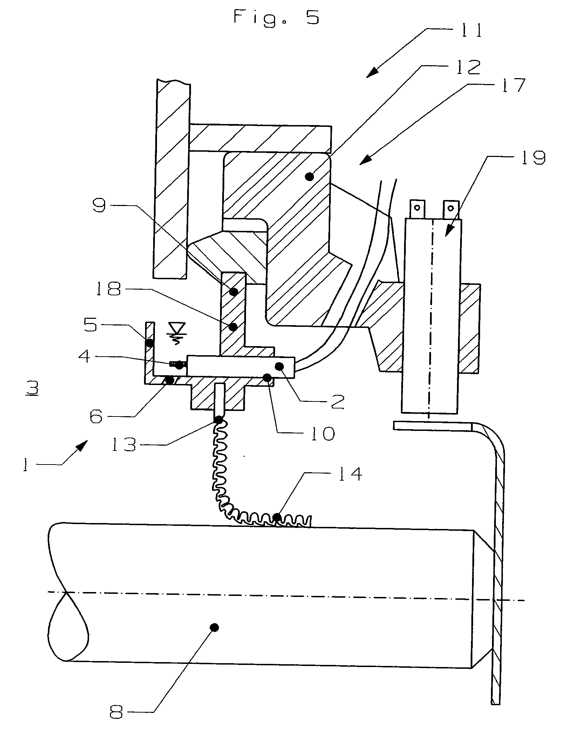

Figur 5 zeigt einen Gehäuseverschlussdeckel 17 mit einem Versteifungsflansch 12 aus Leichtmetall und einem Dichtflansch 18 aus Kunststoff-Spritzguss. An dem Dichtflansch 18 ist innenumfangsseitig eine Dichtung 13 mit einer Dichtlippe 14 angeordnet, die entgegen dem abzudichtenden Raum 3 vorgewölbt ist. Die Messzunge 4 ist in einer Ausnehmung 10 des Dichtflansches 18 befestigt. Die Messzunge 4 der Sensoreinrichtung 2 ragt in den abzudichtenden Raum 3. An den Dichtflansch 18 ist eine Rückhalteeinrichtung angeformt, die einen Raum bildet, in den die Messzunge 4 ragt und in dem sich abzudichtendes Medium sammelt welches die Messzunge benetzt. Die Rückhalteeinrichtung 5 weist an der tiefsten Stelle eine Abtropfbohrung 6 auf, durch die das abzudichtende Medium abtropft und dadurch während des Betriebs ständig erneuert wird. Der Gehäuseverschlussdeckel 17 weist zusätzlich zur Sensoreinrichtung 2 eine Einrichtung 19 auf, die der Erfassung der Drehzahl dient.

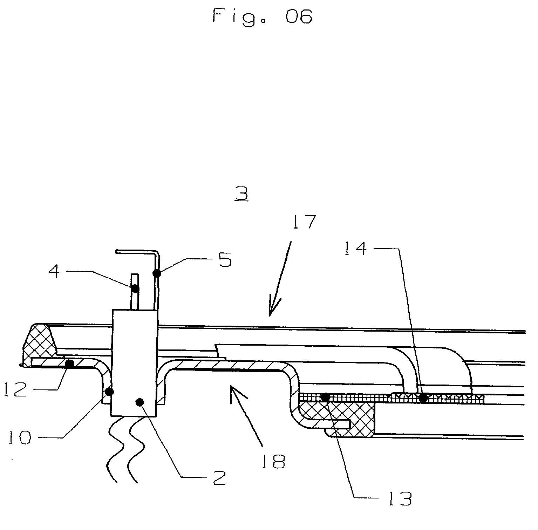

Figur 6 zeigt einen Gehäuseverschlussdeckel 17 mit einem Dichtflansch 18 aus gezogenem Blech. An dem Gehäuseverschlussdeckel 17 ist innenumfangsseitig eine Dichtung 13 mit einer Dichtlippe 14 angeordnet. Der Gehäuseverschlussdeckel 17 weist eine Ausnehmung 10 auf, in der die Sensoreinrichtung 2 befestigt ist. Die Messzunge 4 der Sensoreinrichtung 2 ragt in den abzudichtenden Raum 3. An der Sensoreinrichtung 2 ist eine Rückhalteeinrichtung 5 in Form einer Pfanne befestigt. Durch die Rückhalteeinrichtung 5 ist die Messzunge 4 während des Betriebs ständig mit abzudichtendem Medium benetzt.

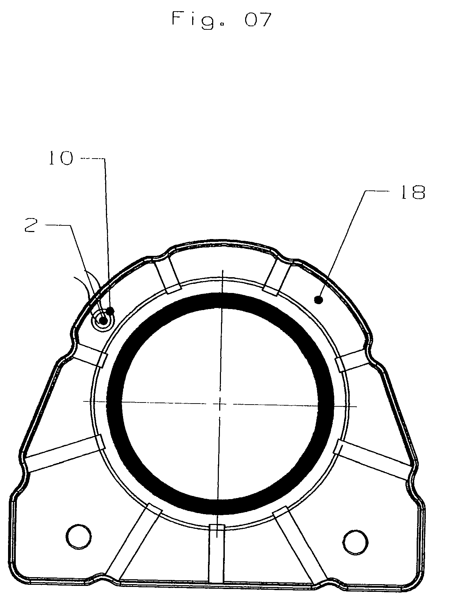

Figur 7 zeigt den Gehäuseverschlussdeckel nach Figur 6 in der Draufsicht.

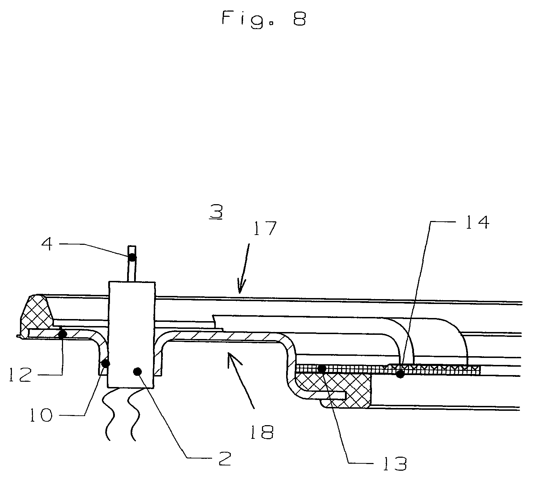

Figur 8 (nicht erfindungsgemäß) zeigt einen Gehäuseverschlussdeckel 17 mit einem Dichtflansch 18 aus gezogenem Blech. An dem Gehäuseverschlussdeckel 17 ist innenumfangsseitig eine Dichtung 13 mit einer Dichtlippe 14 angeordnet. Der Gehäuseverschlussdeckel 17 weist eine Ausnehmung 10 auf, in der die Sensoreinrichtung 2 befestigt ist. Die Messzunge 4 der Sensoreinrichtung 2 ragt in den abzudichtenden Raum 3 und wird während des Betriebs mit Schmiermittel beaufschlagt.

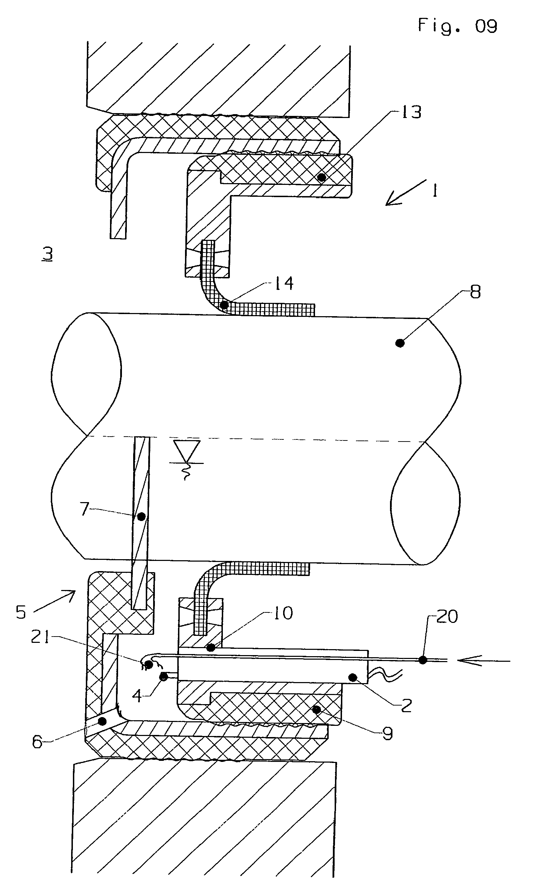

Figur 9 zeigt eine Dichtungsanordnung gemäß Figur 3. Die Dichtlippe 14 der Dichtung 13 ist entgegen dem abzudichtenden Raum 3 vorgewölbt. In die Sensoreinrichtung 2 ist eine Reinigungsleitung 20 integriert, die in eine Reinigungsdüse 21 mündet. Die Reinigungsdüse 21 ist auf die Messzunge 4 gerichtet. Bei Verschmutzung der Messzunge 4 kann ein Reinigungsmittel unter Druck eingeblasen werden. Das Reinigungsmittel kann beispielsweise aus Luft, Schmiermittel und/oder einem schmiermittelverträglichen Lösungsmittel bestehen.

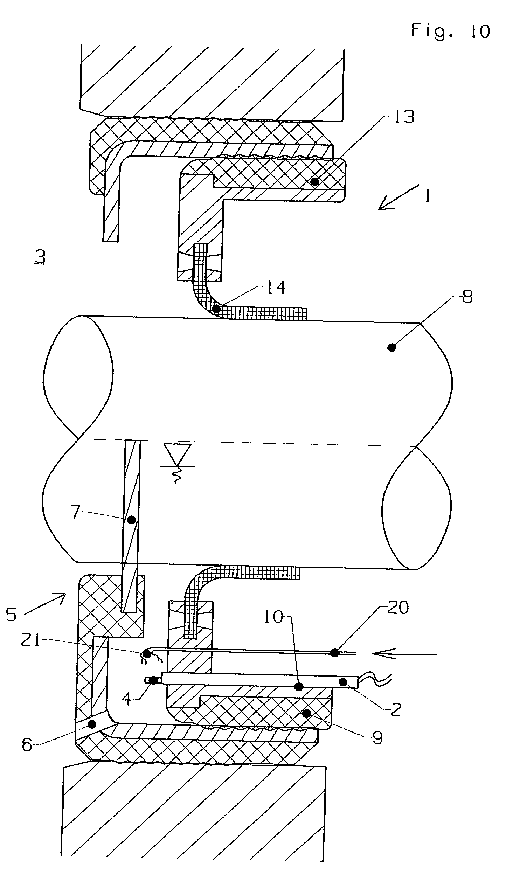

Figur 10 zeigt eine Dichtungsanordnung gemäß Figur 3. Die Dichtlippe 14 der Dichtung 13 ist entgegen dem abzudichtenden Raum 3 vorgewölbt. In der Dichtung 13 ist eine Reinigungsleitung 20 integriert, die in eine Reinigungsdüse 21 mündet. Die Reinigungsdüse 21 ist auf die Messzunge 4 gerichtet. Bei Verschmutzung der Messzunge 4 kann ein Reinigungsmittel unter Druck eingeblasen werden.

## Patentansprüche

1. Dichtungsanordnung (1), umfassend eine Dichtung (13) mit einer Dichtlippe (14) und eine Sensoreinrichtung (2) mit einer in einen abzudichtenden Raum (3) ragenden Messzunge (4), wobei die Messzunge (4) während der bestimmungsgemäßen Verwendung mit abzudichtendem Medium beaufschlagbar ist **dadurch gekennzeichnet, dass** in dem abzudichtenden Raum (3) eine Rückhalteeinrichtung (5) für abzudichtendes Medium angeordnet ist, in die die Messzunge (4) hineinragt.

2. Dichtungsanordnung nach Anspruch 1, **dadurch gekennzeichnet, dass** die Rückhalteeinrichtung (5) an der Dichtung (13) befestigt ist.

3. Dichtungsanordnung nach Anspruch 1 oder 2, **dadurch gekennzeichnet, dass** die Rückhalteeinrichtung (5) eine Rückhaltelippe (7) aufweist, die eine abzudichtende Welle (8) zumindest teilweise umschließt.

4. Dichtungsanordnung nach Anspruch 3, **dadurch gekennzeichnet, dass** die Rückhaltelippe (7) die Welle (8) zumindest teilweise berührend umschließt.

5. Dichtungsanordnung nach Anspruch 1, **dadurch gekennzeichnet, dass** die Rückhalteeinrichtung (5) an der Sensoreinrichtung (2) befestigt ist.

6. Dichtungsanordnung nach einem der Ansprüche 1 bis 5, **dadurch gekennzeichnet, dass** die Rückhalteeinrichtung (5) eine Abtropfbohrung (6) aufweist.

7. Dichtungsanordnung nach einem der Ansprüche 1 bis 6, **dadurch gekennzeichnet, dass** die Messzunge (4) als Messwertgeber zur Erfassung des Alters des abzudichtenden Mediums ausgebildet ist.

8. Dichtungsanordnung nach einem der Ansprüche 1 bis 7, **dadurch gekennzeichnet, dass** die Messzunge (4) als Messwertgeber zur Erfassung der Temperatur und/oder des Drucks und/oder der Füllmenge des abzudichtenden Mediums ausgebildet ist.

9. Dichtungsanordnung nach einem der Ansprüche 1 bis 8, **dadurch gekennzeichnet, dass** die Dichtung (13) einen Tragkörper (9) aufweist, wobei der Tragkörper (9) eine Ausnehmung (10) aufweist in der die Sensoreinrichtung (2) angeordnet ist.

10. Dichtungsanordnung nach einem der Ansprüche 1 bis 9, **dadurch gekennzeichnet, dass** in der Dichtungsanordnung eine Reinigungseinrichtung angeordnet ist, umfassend eine Reinigungsleitung (20) und eine Reinigungsdüse (21), wobei die Reinigungsdüse (21) auf die Messzunge (4) gerichtet ist.

11. Gehäuseverschlussdeckel mit einer Dichtungsanordnung nach einem der Ansprüche 1 bis 10, **dadurch gekennzeichnet, dass** der Tragkörper (9) als Dichtflansch (12) mit einer Ausnehmung (10) ausgebildet ist, wobei die Sensoreinrichtung (2) in der Ausnehmung (10) angeordnet ist.

12. Gehäuseverschlussdeckel nach Anspruch 11, **dadurch gekennzeichnet, dass** der Dichtflansch (12) aus Kunststoff-Spritzguss gebildet ist.

13. Gehäuseverschlussdeckel nach Anspruch 11, **dadurch gekennzeichnet, dass** der Dichtflansch (12) aus einem metallischen Werkstoff gebildet ist.

## Claims

1. Sealing arrangement (1), comprising a seal (13) with a sealing lip (14) and comprising a sensor device (2) with a measuring probe (4) protruding into a space (3) that is to be sealed off, the measuring probe (4) being exposable to medium to be sealed off during use as intended, **characterized in that** a retaining device (5) for medium to be sealed off into which the measuring probe (4) protrudes is arranged in the space (3) to be sealed off.

2. Sealing arrangement according to Claim 1, **characterized in that** the retaining device (5) is fastened to the seal (13).

3. Sealing arrangement according to Claim 1 or 2, **characterized in that** the retaining device (5) has a retaining lip (7), which at least partially encloses a shaft (8) to be sealed off.

4. Sealing arrangement according to Claim 3, **characterized in that** the retaining lip (7) encloses the shaft (8) at least partially in a contacting manner.

5. Sealing arrangement according to Claim 1, **characterized in that** the retaining device (5) is fastened to the sensor device (2).

6. Sealing arrangement according to one of Claims 1 to 5, **characterized in that** the retaining device (5) has a drainage hole (6).

7. Sealing arrangement according to one of Claims 1 to 6, **characterized in that** the measuring probe (4) is designed as a measuring transducer for detecting the age of the medium to be sealed off.

8. Sealing arrangement according to one of Claims 1 to 7, **characterized in that** the measuring probe (4) is designed as a measuring transducer for detecting the temperature and/or the pressure and/or the filled amount of the medium to be sealed off.

9. Sealing arrangement according to one of Claims 1 to 8, **characterized in that** the seal (13) has a support element (9), the support element (9) having a recess (10) in which the sensor device (2) is arranged.

10. Sealing arrangement according to one of Claims 1 to 9, **characterised in that** a cleaning arrangement comprising a cleaning line (20) and a cleaning nozzle (21) is arranged in the sealing arrangement, the cleaning nozzle (21) being directed at the measuring probe (4).

11. Housing closure cover with a sealing arrangement according to one of Claims 1 to 10, **characterized in that** the support element (9) is formed as a sealing flange (12) with a recess (10), the sensor device (2) being arranged in the recess (10).

12. Housing closure cover according to Claim 11, **characterized in that** the sealing flange (12) is formed from an injection-moulded plastics material.

13. Housing closure cover according to Claim 11, **characterized in that** the sealing flange (12) is formed from a metallic material.

## Revendications

1. Agencement d'étanchéité (1), comprenant un joint d'étanchéité (13) avec une lèvre d'étanchéité (14) et un dispositif de capteur (2) avec une langue de mesure (4) faisant saillie dans un espace (3) à étanchéifier, la langue de mesure (4) prouvant être sollicitée par un milieu à étanchéifier pendant l'utilisation conforme, **caractérisé en ce qu'**un dispositif de retenue (5) pour le milieu à étanchéifier est disposé dans l'espace (3) à étanchéifier, dans lequel pénètre la langue de mesure (4).

2. Agencement d'étanchéité selon la revendication 1, **caractérisé en ce que** le dispositif de retenue (5) est fixé au joint d'étanchéité (13).

3. Agencement d'étanchéité selon la revendication 1 ou 2, **caractérisé en ce que** le dispositif de retenue (5) présente une lèvre de retenue (7) qui entoure au moins en partie un arbre à étanchéifier (8).

4. Agencement d'étanchéité selon la revendication 3, **caractérisé en ce que** la lèvre de retenue (7) entoure au moins en partie l'arbre (8) avec contact.

5. Agencement d'étanchéité selon la revendication 1, **caractérisé en ce que** le dispositif de retenue (5) est fixé au dispositif de capteur (2).

6. Agencement d'étanchéité selon l'une quelconque des revendications 1 à 5, **caractérisé en ce que** le dispositif de retenue (5) présente un alésage d'égouttage (6).

7. Agencement d'étanchéité selon l'une quelconque des revendications 1 à 6, **caractérisé en ce que** la langue de mesure (4) est réalisée sous forme de capteur de mesure pour détecter le vieillissement du milieu à étanchéifier.

8. Agencement d'étanchéité selon l'une quelconque des revendications 1 à 7, **caractérisé en ce que** la langue de mesure (4) est réalisée sous forme de capteur de mesure pour détecter la température et/ou la pression et/ou la quantité de remplissage du milieu à étanchéifier.

9. Agencement d'étanchéité selon l'une quelconque des revendications 1 à 8, **caractérisé en ce que** le joint d'étanchéité (13) présente un corps de support (9), le corps de support (9) présentant un évidement (10) dans lequel est disposé le dispositif de capteur (2).

10. Agencement d'étanchéité selon l'une quelconque des revendications 1 à 9, **caractérisé en ce qu'**un dispositif de nettoyage est disposé dans l'agencement d'étanchéité, lequel comprend une conduite de nettoyage (20) et une buse de nettoyage (21), la buse de nettoyage (21) étant orientée vers la langue de mesure (4).

11. Couvercle de fermeture de boîtier comprenant un agencement d'étanchéité selon l'une quelconque des revendications 1 à 10, **caractérisé en ce que** le corps de support (9) est réalisé sous forme de bride d'étanchéité (12) avec un évidement (10), le dispositif de capteur (2) étant disposé dans l'évidement (10).

12. Couvercle de fermeture de boîtier selon la revendication 11, **caractérisé en ce que** la bride d'étanchéité (12) est formée de plastique moulé par injection.

13. Couvercle de fermeture de boîtier selon la revendication 11, **caractérisé en ce que** la bride d'étanchéité (12) est formée d'un matériau métallique.
